# EUROPÄISCHE PATENTANMELDUNG

(11) **EP 2 783 568 A1**
(43) Veröffentlichungstag der Anmeldung: **01.10.2014**
(21) Anmeldenummer: 14001077.8
(22) Anmeldetag: 24.03.2014
(51) Int. Cl.: A01K 27/00

(54) **Führstrick**

(30) Priorität: 27.03.2013 DE 102013005218; 27.03.2013 DE 202013002900 U
(71) Anmelder: Hofmann, Matthias, 75417 Mühlacker Lomersheim (DE)
(72) Erfinder: Hofmann, Matthias, 75417 Mühlacker Lomersheim (DE)
(74) Vertreter: Dosterschill, Peter

(57) **Zusammenfassung**

Die Erfindung betrifft einen Führstrick für ein Tier, insbesondere für ein Pferd, wobei der Führstrick eine Seele (10) und einen diese umgebenden Mantel (11) aufweist. Erfindungsgemäß ist vorgesehen, dass die in Längsrichtung des Führstricks (1) von seinem ersten Ende (1') zu seinem zweiten Ende (1") verlaufende Seele (10) aus einem elastischen Material ausgebildet ist. Die Seele (10) ist mit dem Mantel (11) im Bereich des ersten und des zweiten Endes (1', 1") des Führstricks (1) verbunden; sie weist im unbelasteten Zustand eine erste Ausdehnung auf, und sie ist von dem Mantel (11) aus einem Seilgeflecht umgeben, bis zu einer zweiten Ausdehnung, die größer als die erste Ausdehnung der Seele (10) im unbelasteten Zustand ist, ausziehbar. Der Mantel (11) des Führstricks (1) ist relativ zu der Seele (10) beweglich, wobei der Führstrick (1) wahlweise ein Verschlusselement (2) aufweist. Die Seele (10) weist eine derartige Zugkraft auf, die im Wesentlichen gleich dem Eigengewicht des Führstricks (1) und des Verschlusselements (2) ist. Der erfindungsgemäße Führstrick vermindert in vorteilhafter Weise die Gefahr, dass das Tier und/oder der Tierführer verletzt werden.

## Beschreibung

Die Erfindung betrifft einen Führstrick für ein Tier, insbesondere für ein Pferd, nach dem Oberbegriff des Patentanspruchs 1.

Führstricke sind bekannt und werden unter anderem zum Führen und/oder Anbinden von Tieren, insbesondere von Pferden verwendet. Die bekannten Führstricke weisen eine Länge von 2 m bis 2,5 m auf und sind zwar elastisch biegbar, jedoch in ihrer Länge unveränderlich. Bewegt nun der das Tier Führende dieses zu nahe an sich heran, wird der Strick nicht mehr unter Spannung gehalten, so dass der Strick durchhängt. Dies birgt die Gefahr in sich, dass das Tier sich in dem herabhängenden Führstrick verheddert oder auf diesen tritt. Hierdurch entsteht die Gefahr, dass das Tier und/oder der Tierführer verletzt werden. Die bekannten Führstricke besitzen weiterin den Nachteil, dass sie für das Tier gefährlich werden können, wenn dieses ausbricht und davongaloppiert. In einem solchen Fall hängt der Führstrick vom Tier herab und das freie Ende des Stricks kann sich an Gegenständen verfangen. Es ist auch möglich, dass das Tier auf diesen herabhängenden Führstrick tritt und dadurch in seinem Bewegungsablauf gestört wird, erschrickt, ausbricht oder im Galopp stürzt. Auch dies erhöht die Gefahr gefährlicher Verletzungen des flüchtenden Tiers und von Personen, die sich in der Nähe des Tieres befinden.

Es sind Kletterseile nach EN 892 sowie Bungee-jumping-Seile bekannt, welche die bei einem Sturz auftretenden hohen Kräfte sicher aufnehmen sollen, ohne eine für den Menschen durch eine zu hohe Bremsbeschleunigung gefährliche Wirkung zu verursachen. Diese Seile weisen eine Seele aus elastischem Material auf, und dienen dazu, eine hohe Kraft in Längsrichtung des Seils aufzunehmen.

Aus der CH 674 696 A5 ist eine Führleine für Tiere, insbesondere für Pferde, bekannt, die einen Haken zum Festmachen der Leine am Halfter aufweist. Die Leine besitzt einen dehnbaren und einen undehnbaren Abschnitt. In dem dehnbaren Abschnitt ist ein den Dehnweg beschränkendes Zugorgan vorgesehen, wobei das Zugorgan lockig in den dehnbaren Abschnitt eingelegt oder als Mantel um den dehnbaren Abschnitt ausgelegt ist.

Aus der GB 2 453 101 A ist ein Zügel für ein Pferd bekannt, der eine von dem Seilgeflecht umgebene elastische Seele besitzt. Eine derartige Ausgestaltung soll dem Reiter beim Dirigieren des Pferdes helfen, da bei einem weichen Zügel, hervorgerufen durch eine elastischere Seele, Armbewegungen des Reiters nicht vollständig auf das Pferd übertragen werden, während bei einer weniger elastischeren Seele die Lenkbewegungen des Reiters über den dann strafferen Zügel direkter auf das Pferd übertragen werden.

Ausgehend von diesem Stand der Technik liegt der vorliegenden Erfindung die Aufgabe zugrunde, einen Führstrick der eingangs genannten Art derart weiterzubilden, dass die vorstehend beschriebenen Nachteile zumindest verringert werden.

Die Aufgabe wird erfindungsgemäß dadurch gelöst, dass die in Längsrichtung des Führstricks, der eine Seele und einen diese umgebenden Mantel aufweist, von seinem ersten Ende zu seinem zweiten Ende verlaufende Seele aus einem elastischen Material ausgebildet ist, dass die Seele mit dem Mantel im Bereich der beiden Enden des Führstricks verbunden ist und im unbelasteten Zustand eine erste Ausdehnung aufweist, dass die Seele von dem Mantel aus einem Seilgeflecht umgeben ist, welcher bis zu einer zweiten Ausdehnung, die größer als die erste Ausdehnung der Seele im unbelasteten Zustand ist, ausziehbar ist, dass der Mantel des Führstricks relativ zu der Seele beweglich ist, dass der Führstrick wahlweise ein Verschlusselement aufweist, und dass die Seele eine derartige Zugkraft aufweist, die im wesentlichen gleich dem Eigengewicht des Führstricks und des wahlweise daran befestigen Verschlusselements ist.

Die erfindungsgemäße Maßnahme besitzt den Vorteil, dass hierdurch ein Führstrick ausgebildet wird, der sich im unbelasteten Zustand selbständig zusammenzieht, so dass die Gefahr, dass das am erfindungsgemäßen Führstrick angebundene und/oder von ihm geführte Tier auf einen herabhängenden Führstrick tritt und/oder sich darin verheddert, minimiert oder zumindest reduziert wird. Tritt das Tier dennoch auf den Führstrick, so bewirkt die elastische Ausbildung der Seele zusammen mit der beschriebenen Ausgestaltung des sie umgebenden Mantels, dass der Führstrick nachgibt und das Tier bei einem Schritt nach vorne nicht behindert wird. Das durch die erfindungsgemäße Maßnahme erreichte "automatische Verkürzen" des Führstricks ist somit insbesondere unter Verletzungsgesichtspunkten äußerst vorteilhaft.

Eine vorteilhafte Weiterbildung der Erfindung sieht vor, dass an zumindest einem Ende des erfindungsgemäßen Führstricks ein Verschlusselement, insbesondere ein Panik-Haken oder ein Karabiner angebracht ist. Mit dieser Maßnahme wird der Vorteil erzielt, dass der erfindungsgemäße Führstrick sicher an dem zu führenden und/oder anzubindenden Tier befestigt werden kann. Das Vorsehen eines Panik-Verschlusses führt zu dem Vorteil, dass sich der erfindungsgemäße Führstrick im Gefährdungsfall von dem Tier löst, wenn die verschlusselementspezifisch vorgegebene Auslösekraft überschritten wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Fig. 1: eine schematische Darstellung eines Ausführungsbeispiels des erfindungsgemäßen Führstricks, und
- Fig. 2: einen Schnitt durch das Ausführungsbeispiel nach der Fig. 1.

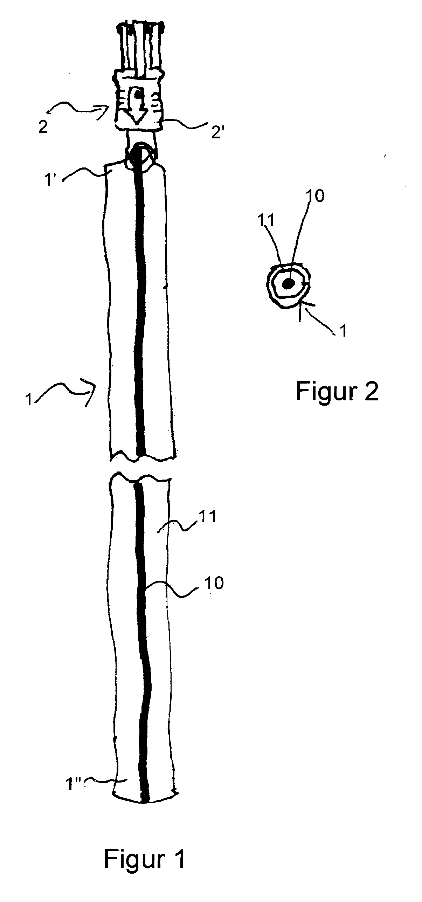

In den Figuren 1 und 2 ist ein mit 1 bezeichnetes Ausführungsbeispiel eines Führstricks dargestellt, an dessen einem "ersten" Ende 1' ein bekanntes und daher nicht mehr näher beschriebenes Verschlusselement 2, hier ein Panik-Haken 2', angebracht ist. Dem Fachmann ist aus nachstehenden Erläuterungen klar ersichtlich, dass es nicht zwingend erforderlich ist, dass an dem Führstrick 1 ein derartiger Panik-Haken oder ein ähnliches Verschlusselement angebracht ist. Vielmehr ist es auch möglich, dass der Führstrick ohne ein derartiges Bauteil verwendet wird. Es ist natürlich auch möglich, an einem "zweiten" Ende 1" des Führstricks ein derartiges Verschlusselement anzubringen.

Der Führstrick gliedert sich prinzipiell in eine in Längsrichtung verlaufende, dehnbare Seele 10 aus elastischem Material (z. B. Gummiband), welches von einem Mantel 11 aus Seilgeflecht umgeben ist. Derartige Seelen 10 aus elastischem Material sowie diese Seelen umgebende Mantelgeflechte sind bekannt und werden daher nicht näher beschrieben.

Die Seele 10 ist dabei derart ausgestaltet, dass sie, um das unten beschriebene "automatische Zusammenziehen" zu ermöglichen, lediglich eine derartige Zugkraft aufweist, dass diese im wesentlichen gleich dem Eigengewicht des Führstricks 1 und eines ggfs. daran befestigten Verschlusselements 2 ist.

Der Mantel 11 aus Seilgeflecht ist mit der Seele 10 im Bereich der Enden 1', 1" des Führstricks verbunden und im übrigen Bereich relativ zu ihr beweglich, so dass sich der Mantel 11 unter Kraftbeaufschlagung auseinanderziehen kann.

Wesentlich ist nun die Ausbildung der Seele 10 und des Mantels 11 sowie die Abstimmung dieser beiden Bauteile aufeinander: Der Führstrick 1 weist im ausgezogenen Zustand eine vorgebbare, "zweite" Ausdehnung L2 auf, um damit ein Tier, insbesondere ein Pferd, aus einer entsprechenden Distanz sicher führen zu können. Der Mantel 11 ist daher derart ausgebildet, dass der Führstrick 1 bis auf die maximale Ausdehnung L2 auseinander gezogen werden kann.

Um nun ein unerwünschtes Durchhängen des Führstricks 1 zu vermeiden, wenn dieser vom Führer des Tiers nicht gespannt gehalten wird, ist die Seele 10 des Führstricks 1 derart ausgebildet, dass sie im unbelasteten Zustand eine "erste" Ausdehnung L1 aufweist. Dies bewirkt, dass im unbelasteten Zustand der Mantel 11 aus Seilgeflecht des Führstricks 1 sich ebenfalls auf die erste Ausdehnung L1 verkürzt, da das Mantelgeflecht 11 durch die Wirkung der elastischen Seele 10 zusammengezogen und dadurch der Führstrick 1 auf die vorgenannte erste Ausdehnung L1 verkürzt wird. Der Mantel 11 schiebt sich also durch die Wirkung der Seele 10 zusammen.
Die zweite Ausdehnung L2 ist größer als die erste Ausdehnung L1.

Diese Maßnahme führt zu dem Vorteil, dass beim Führen eines Tiers, insbesondere eines Pferdes, der Führstrick 1 nicht mehr hängt und den Boden berührt, wodurch insbesondere ein Drauftreten des Tiers auf den Führstrick 1 verhindert oder die Wahrscheinlichkeit hierfür zumindest reduziert wird. Tritt das Tier dennoch auf den Führstrick, so bewirkt die elastische Ausbildung der Seele 1 zusammen mit der beschriebenen Ausgestaltung des die Seele 10 umgebenden Mantels 11, dass der Führstrick 1 nachgibt und das Tier bei einem Schritt nach vorne nicht behindert. Während bei bekannten Führstricken diese - um die Führlänge zu verkürzen - doppelt oder dreifach in die Hand genommen werden mussten, ist dies in vorteilhafter Art und Weise beim erfindungsgemäßen Führstrick 1 gerade nicht erforderlich, da die Seele 10 aufgrund ihrer beschriebenen und auf den Mantel 11 abgestimmten Ausgestaltung ein "automatisches" Verkürzen des Führstricks 1 mit sich bringt.

Der beschriebene Führstricks 1 zeichnet sich durch den weiteren Vorteil aus, dass, falls sich das Tier beim Führen vom Führer losreißt, sich der an ihm befestigte Führstrick 1 selbsttätig zusammenzieht, so dass die Gefahr verringert oder vermieden wird, dass sich der Führstrick an einem Objekt verfängt oder das Pferd drauftritt, erschrickt, ausbricht, was im Galopp sogar zum Sturz des Pferds führen kann, und dadurch das Tier abrupt stoppt.

Zusätzlich zeichnet sich der erfindungsgemäße Führstricks 1 durch den weiteren Vorteil aus, dass man beim Anbinden eines Tieres mittels des Führstricks einen Bewegungsfreiraum des Tieres bis zu einer Länge erzielt, die der zweiten, maximalen Ausdehnung L2 entspricht, ohne dass die Gefahr besteht, dass sich das Tier im Annähern an seinen Anhängepunkt an dem Führstrick 1 verheddert. Insbesondere bei Pferden kommt es manchmal sogar vor, dass ein Pferd, das auf einen Führstrick tritt, dann in Panik gerät, sich losreißt oder sogar nach rückwärts überschlägt. Dies kann sogar so weit gehen, dass das Pferd derartige schwere Verletzungen erleidet, dass es eingeschläfert werden muss.

Zusammenfassend ist festzuhalten, dass der erfindungsgemäße Führstrick 1 derart ausgebildet wird, dass er sich im unbelasteten Zustand selbsttätig zusammenzieht, so dass die Gefahr eliminiert oder zumindest reduziert wird, dass das mit dem beschriebenen Führstrick 1 angebundene und/oder geführte Pferd auf einen herabhängenden Führstrick tritt und sich darin verheddert Der erfindungsgemäße Führstrick 1 ist also insbesondere unter dem Gesichtspunkt der Vermeidung von Verletzungen außerordentlich vorteilhaft.

### Bezugszeichenliste

- 1: Führstrick
- 1': Erstes Ende des Führstricks 1
- 1": Zweites Ende des Führstricks 1
- 2: Verschlusselemente
- 2': Panik-Haken
- 10: Seele
- 11: Mantel
- L1: Erste Ausdehnung des Führstricks 1 in unbelastetem Zustand
- L2: Zweite, maximale Ausdehnung des Führstricks 1

## Patentansprüche

1. Führstrick für ein Tier, insbesondere für ein Pferd, wobei der Führstrick eine Seele (10) und einen diese umgebenden Mantel (11) aufweist,
**dadurch gekennzeichnet,**
- **dass** die in Längsrichtung des Führstricks (1) von seinem ersten Ende (1') zu seinem zweiten Ende (1") verlaufende Seele (10) aus einem elastischen Material ausgebildet ist,
- **dass** die Seele (10) mit dem Mantel (11) im Bereich des ersten und des zweiten Endes (1', 1") des Führstricks (1) verbunden ist,
- **dass** die Seele (10) im unbelasteten Zustand eine erste Ausdehnung (L1) aufweist,
- **dass** die Seele (10) von dem Mantel (11) aus einem Seilgeflecht umgeben ist, welches bis zu einer zweiten Ausdehnung (L2), die größer als die erste Ausdehnung (L1) der Seele (10) im unbelasteten Zustand ist, ausziehbar ist,
- **dass** der Mantel (11) des Führstricks (1) relativ zu der Seele (10) beweglich ist,
- **dass** der Führstrick (1) wahlweise ein Verschlusselement (2) aufweist, und
- **dass** die Seele (10) eine derartige Zugkraft aufweist, die im Wesentlichen gleich dem Eigengewicht des Führstricks (1) und des wahlweise daran befestigten Verschlusselements (2) ist.

2. Führstrick nach Anspruch 1, **dadurch gekennzeichnet,**
- **dass** das Verschlusselement (2) an mindestens einem Ende (1', 1") des Führstricks (1) angeordnet ist.

3. Führstrick nach einem der vorstehenden Ansprüche, **dadurch gekennzeichnet,**
- **dass** das Verschlusselement (2) ein Panik-Haken (2') oder ein Panik-Karabiner ist.
